# EUROPÄISCHE PATENTSCHRIFT

(11) **EP 2 102 482 B1**
(45) Veröffentlichungstag und Bekanntmachung des Hinweises auf die Patenterteilung: **16.06.2010**
(21) Anmeldenummer: 07858197.2
(22) Anmeldetag: 28.12.2007
(51) Int. Cl.: F02M 25/07, F02D 9/04, F02B 29/04, F02B 37/02

(54) **BRENNKRAFTMASCHINENSYSTEM**
INTERNAL COMBUSTION ENGINE SYSTEM
SYSTÈME À MOTEUR À COMBUSTION INTERNE

(30) Priorität: 16.01.2007 DE 102007003116
(43) Veröffentlichungstag der Anmeldung: 23.09.2009
(73) Patentinhaber: MAHLE International GmbH, 70376 Stuttgart (DE)
(72) Erfinder: ELSÄSSER, Alfred, 75210 Keltern (DE); GENIESER, Patric, 70191 Stuttgart (DE); LAU, Mike, 70563 Stuttgart (DE); LERCH, Boris, 70376 Stuttgart (DE); LOCH, Adam, 70378 Stuttgart (DE); MUDROH, Kristijan, 70327 Stuttgart (DE)
(74) Vertreter: BRP Renaud & Partner
(86) Internationale Anmeldenummer: PCT/EP2007/064601
(87) Internationale Veröffentlichungsnummer: WO 2008/086939

(56) Entgegenhaltungen:
- EP-A- 0 531 277
- EP-A- 1 455 078
- EP-A- 1 712 760
- DE-A1- 4 414 849
- DE-A1- 10 040 613
- DE-A1- 10 327 603
- DE-A1-102005 002 266

## Beschreibung

Die vorliegende Erfindung betrifft ein Brennkraftmaschinensystem, insbesondere in einem Kraftfahrzeug.

Üblicherweise umfasst ein Brennkraftmaschinensystem eine Brennkraftmaschine, zum Beispiel einen Dieselmotor oder einen Benzinmotor, eine Frischgasanlage zum Zuführen von Frischgas zur Brennkraftmaschine, eine Abgasanlage zum Abführen von Abgas von der Brennkraftmaschine, sowie eine Abgasrückführanlage zum Entnehmen von Abgas aus der Abgasanlage an einer Entnahmestelle und zum Einleiten des entnommenen Abgases in die Frischgasanlage an einer Einleitstelle. Die Abgasrückführung wird durchgeführt, um die Werte für Schadstoffemission und Kraftstoffverbrauch der Brennkraftmaschine zu senken.

Zur Realisierung einer Abgasrückführung ist ein Druckgefälle zwischen der Entnahmestelle und der Einleitstelle erforderlich. Insbesondere bei aufgeladenen Brennkraftmaschinen kann die Bereitstellung eines ausreichenden Druckgefälles problematisch sein. Hierzu sei auf die Offenbarungen der DE 100 40 613 A1 oder der DE 10 2005 002 266 A1 hingewiesen.

Die vorliegende Erfindung beschäftigt sich mit dem Problem, für ein Brennkraftmaschinensystem der eingangs genannten Art eine verbesserte Ausführungsform anzugeben, die sich insbesondere durch eine verbesserte Abgasrückführung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in der Abgasanlage stromab der Entnahmestelle ein Abgasventil anzuordnen, das so ausgestaltet ist, dass damit ein durchströmbarer Querschnitt der Abgasanlage gesteuert werden kann. Durch diese Bauweise ist es möglich, bei entsprechender Ansteuerung des Abgasventils stromauf davon gezielt einen Druckanstieg im Abgas zu erzeugen. Hierdurch kann das Druckgefälle zwischen der Entnahmestelle und der Einleitstelle vergrößert werden, was die Abgasrückführung verbessert.

Gemäß einer vorteilhaften Weiterbildung kann das Abgasventil so ausgestaltet sein, dass es dynamisch ansteuerbar ist. Ein dynamisch ansteuerbares beziehungsweise angesteuertes Abgasventil liegt dann vor, wenn beispielsweise mittels einer entsprechenden Ventilsteuerung die Schaltzustände des Abgasventils in Abhängigkeit von Betriebszuständen der Brennkraftmaschine eingestellt werden, beziehungsweise einstellbar sind. Beispielsweise kann das Abgasventil dynamisch in Abhängigkeit von Last und/oder Drehzahl der Brennkraftmaschine betätigt werden, um so den Abgasdruck an der Entnahmestelle dynamisch an den sich in Abhängigkeit des Betriebszustands der Brennkraftmaschine ändernden Bedarf an rückzuführenden Abgas anpassen zu können.

Des weiteren kann das Abgasventil als schnellschaltendes Ventil ausgestaltet sein. Unter einem schnellschaltenden Ventil wird im vorliegenden Zusammenhang ein Ventil verstanden, das innerhalb einer vergleichsweise kurzen Zeit zwischen zwei extremen Steuerstellungen verstellbar ist. Beispielsweise ist ein derartiges schnellschaltendes Ventil zwischen einer Steuerstellung mit maximal geöffnetem durchströmbaren Querschnitt und einer Steuerstellung mit minimal geöffnetem beziehungsweise mit geschlossenem Querschnitt mit Schaltzeiten von weniger als 50 ms oder weniger als 20 ms oder weniger als 10 ms oder weniger als 5 ms verstellbar. Derartige schnellschaltende Ventile sind grundsätzlich als sogenannte Lufttaktventile bekannt, die in einer Frischgasanlage dazu verwendbar sind, durch Ausnutzung strömungsdynamischer Effekte eine Impulsaufladung der Brennkraftmaschine zu bewirken.

Bei einer weiteren vorteilhaften Ausführungsform kann zur Realisierung einer vorbestimmten Abgasrückführrate vorgesehen sein, das Abgasventil so auszugestalten, dass es zur Erzeugung impulsartiger Druckstöße mit vorbestimmter Frequenz in der Abgasrückführanlage ausgestaltet beziehungsweise ansteuerbar ist. Durch die Erzeugung von Druckimpulsen lassen sich vergleichsweise hohe Amplituden im Druckverlauf des rückgeführten Abgases erzeugen. Im Bereich dieser Druckamplituden herrscht dann vergleichsweise großes Druckgefälle zwischen Entnahmestelle und Einleitstelle, was die Abgasrückführung begünstigt. Impulsartige Druckstöße lassen sich insbesondere durch schnelles Öffnen und Sperren des durchströmbaren Querschnitts der Abgasanlage erzielen, da durch die kurzzeitigen Querschnittsveränderungen strömungsdynamische Effekte auftreten, die zur gewünschten Impulsbildung führen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

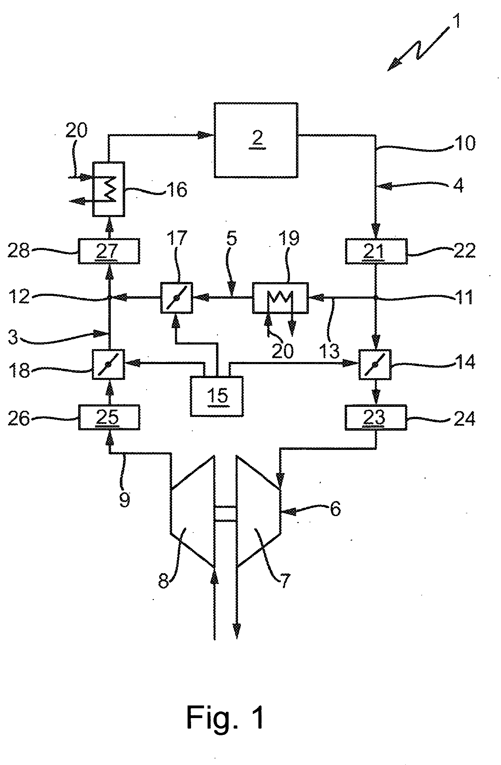

- Fig. 1 bis 3: jeweils eine stark vereinfachte, schaltplan- artige Prinzipdarstellung eines Brennkraftma- schinensystems bei verschiedenen Ausführungs- formen.

Entsprechend den Fig. 1 bis 3 umfasst ein Brennkraftmaschinensystem 1, das insbesondere in einem Kraftfahrzeug angeordnet sein kann, eine Brennkraftmaschine 2, eine Frischgasanlage 3, eine Abgasanlage 4, sowie eine Abgasrückführanlage 5. Bei der Brennkraftmaschine 2 kann es sich um einen Dieselmotor oder um einen Benzinmotor oder dergleichen handeln. Die Brennkraftmaschine 2 kann als reiner Saugmotor oder - wie hier - als aufgeladener Motor ausgestaltet sein. Bei der dargestellten aufgeladenen Variante ist das Brennkraftmaschinensystem 1 zusätzlich z.B. mit einem Abgasturbolader 6 ausgestattet, dessen Turbine 7 in der Abgasanlage 4 und dessen Verdichter 8 in der Frischgasanlage 3 angeordnet ist.

Die Frischgasanlage 3 dient zur Zuführung von Frischgas, insbesondere Luft, zur Brennkraftmaschine 2. Hierzu weist die Frischgasanlage 3 eine Frischgasleitung 9 auf, die an die Brennkraftmaschine 2 angeschlossen ist und in der im vorliegenden Fall der Verdichter 8 angeordnet ist.

Die Abgasanlage 4 dient zum Abführen von Abgas von der Brennkraftmaschine 2. Hierzu umfasst die Abgasanlage eine Abgasleitung 10, die an die Brennkraftmaschine 2 angeschlossen ist und die im vorliegenden Fall die Turbine 7 enthält.

Die Abgasrückführanlage 5 ist dazu ausgestaltet, aus der Abgasanlage 4 an einer Entnahmestelle 11 Abgas zu entnehmen und dieses entnommene Abgas an einer Einleitstelle 12 in die Frischgasanlage 3 einzuleiten. Hierzu weist die Abgasanlage 5 eine Abgasleitung 13 auf, die einerseits über die Entnahmestelle 11 an die Abgasleitung 10 und andererseits über die Einleitstelle 12 an die Frischgasleitung 9 angeschlossen ist.

Um die Abgasrückführung zu verbessern, ist ein Abgasventil 14 vorgesehen, das in der Abgasanlage 4 beziehungsweise in der Abgasleitung 10 stromab der Entnahmestelle 11 angeordnet ist. Das Abgasventil 14 ist so ausgestaltet, dass damit ein durchströmbarer Querschnitt der Abgasanlage 4 beziehungsweise der Abgasleitung 10 steuerbar ist. Durch Reduzieren des durchströmbaren Querschnitts der Abgasanlage 4 kann stromauf des Abgasventils 14 der Druck im Abgas erhöht werden, was die Druckdifferenz zwischen Entnahmestelle 11 und Einleitstelle 12 vergrößert. Diese Druckdifferenz treibt das rückzuführende Abgas in Richtung der Frischgasanlage 3 an. Durch die gezielte Erzeugung eines Staudrucks mit Hilfe des Abgasventils 14 stromauf davon, kann die rückgeführte Abgasmenge vergrößert werden, was insgesamt die Abgasrückführung verbessert.

Besonders vorteilhaft ist eine Ausführungsform, bei welcher das Abgasventil 14 dynamisch ansteuerbar ausgestaltet ist. Hierdurch ist es insbesondere möglich, das Abgasventil 14 in Abhängigkeit des sich dynamisch verändernden Betriebszustands der Brennkraftmaschine 2 zu betätigen, um so durch die dynamische Steuerung des Abgasdrucks an der Entnahmestelle 11 die Abgasrückführrate beziehungsweise die Abgasrückführmenge an den sich dynamisch ändernden Bedarf anzupassen. Insbesondere kann dadurch das Abgasventil 14 dynamisch in Abhängigkeit der Drehzahl und/oder der Last der Brennkraftmaschine 2 betätigt werden. Zur Betätigung beziehungsweise zur Ansteuerung des Abgasventils 14 ist eine Ventilsteuerung 15 vorgesehen, die auf geeignete Weise mit dem Abgasventil 14 gekoppelt ist und die beispielsweise mit einer Motorsteuerung gekoppelt ist oder in diese integriert ist.

Das Abgasventil 14 kann vorzugsweise als schnellschaltendes Ventil ausgestaltet sein, das innerhalb relativ kurzer Schaltzeiten oder Steuerzeiten die gewünschten Veränderungen des durchströmbaren Querschnitts der Abgasanlage 4 realisiert. Beispielsweise kann das Abgasventil 14 im Millisekundenbereich zwischen einer Sperrstellung beziehungsweise einer Stellung mit minimalem durchströmbaren Querschnitt und einer Offenstellung beziehungsweise einer Stellung mit maximal geöffnetem Querschnitt verstellt werden. Insbesondere kann das schnellschaltende Abgasventil 14 im gleichen Frequenzbereich geschaltet werden, in dem auch die Ladungswechselvorgänge der Brennkraftmaschine 2 stattfinden. Hierdurch ist eine Synchronisation des Abgasventils 14 an Druckschwankungen im Abgas anpassbar, die aufgrund der Ladungswechselvorgänge in der Abgasanlage 4 ohnehin auftreten. Beispielsweise können dadurch Druckamplituden in der schwingenden Abgasströmung gezielt verstärkt werden.

Das Abgasventil 14 kann als diskontinuierlich arbeitendes Ventil ausgestaltet sein, bei dem ein Ventilglied, zum Beispiel eine Schmetterlingsklappe, mit entgegengesetzten Bewegungsrichtungen zumindest zwischen zwei vorbestimmten Steuerstellungen umschaltbar ist. Ohne Beschränkung der Allgemeinheit kann ein derartiges diskontinuierlich arbeitendes Abgasventil 14 beispielsweise als Ventilglied eine um eine Drehachse verschwenkbare Klappe aufweisen, die zwischen einer Schließstellung und einer Offenstellung umschaltbar ist. Dabei dreht das Ventilglied beim Schließen in der einen Drehrichtung und beim Öffnen in der anderen Drehrichtung. Des weiteren ist für ein diskontinuierlich arbeitendes Ventil kennzeichnend, dass das jeweilige Ventilglied in der jeweils eingestellten Steuerstellung für eine gewisse Zeit verbleibt, so dass das Ventilglied nur bei den zeitlich begrenzten, schnell ablaufenden Schaltvorgängen in Bewegung ist.

Alternativ kann es sich beim Abgasventil 14 um ein kontinuierlich arbeitendes Ventil handeln, dessen Ventilglied mit gleicher Bewegungsrichtung zumindest zwei verschiedene Steuerstellung durchläuft. Ohne Beschränkung der Allgemeinheit kann ein derartiges kontinuierlich arbeitendes Abgasventil 14 beispielsweise eine Klappe oder einen Drehschieber als Ventilglied aufweisen, das um eine Drehachse rotierend antreibbar ist. Charakterisierend ist hierbei für das kontinuierlich arbeitende Abgasventil 14, dass das jeweilige Ventilglied im Betrieb des Ventils permanent mit der gleichen Rotationsrichtung dreht und dabei mit einer vorbestimmten Drehgeschwindigkeit zum Beispiel einen Schließwinkelbereich und einen Öffnungswinkelbereich durchfährt. Auch mit Hilfe eines derartigen kontinuierlich arbeitenden Abgasventils 14 lassen sich extrem kurze Schaltzeiten erzielen, wobei jedoch permanent eine Querschnittsveränderung stattfinden kann und das jeweilige Ventilglied permanent in Bewegung ist. Durch Variation der Drehgeschwindigkeit lassen sich bei einem derartigen kontinuierlich arbeitenden Abgasventil 14 die Schaltzeiten einstellen.

Entsprechend einer besonders vorteilhaften Ausführungsform kann vorgesehen sein, das entsprechend ausgestaltete Abgasventil 14 so anzusteuern, dass damit impulsartige Druckstöße mit vorbestimmter Frequenz in der Abgasrückführanlage 5 erzeugt werden können. Diese Druckimpulse lassen sich gezielt so ausgestalten, dass damit eine vorbestimmte Abgasrückführrate beziehungsweise Abgasrückführmenge realisierbar ist. Beispielsweise lassen sich mit Hilfe eines Abgasventils 14, mit dem vergleichsweise kurze Schaltzeiten realisierbar sind, also insbesondere mit einem schnellschaltenden Abgasventil 14 strömungsdynamische Effekte ausnutzen, um derartige Druckimpulse zu generieren. Des weiteren lassen sich ohnehin vorhandene Druckschwankungen im Abgasstrom, die aufgrund von Ladungswechselvorgängen entstehen, durch eine entsprechend adaptierte und synchronisierte Ansteuerung des Abgasventils 14 verstärken, um so die gewünschten Druckimpulse zu generieren.

Sofern das Brennkraftmaschinensystem 1 - wie hier - mit einem Abgasturbolader 6 ausgestattet ist, kann in der Frischgasanlage 3 zusätzlich ein Frischgaskühler 16 angeordnet sein, der in der Regel als Ladeluftkühler bezeichnet wird. Der Frischgaskühler 16 befindet sich dabei stromab des Verdichters 8 in der Frischgasleitung 9. Zweckmäßig ist die Einleitstelle 12 stromauf des Frischgaskühlers 16 angeordnet. Hierdurch kann zum einen das rückgeführte Abgas zusätzlich gekühlt werden. Zum anderen lässt sich die Durchmischung von Frischgas und rückgeführtem Abgas dadurch verbessern, dass das Gemisch den Frischgaskühler 16 durchströmen muss.

Bei den hier gezeigten Ausführungsformen ist ein Rückführventil 17 vorgesehen, das optional in der Abgasrückführanlage 5 beziehungsweise in der Abgasrückführleitung 13 angeordnet sein kann, um den durchströmbaren Querschnitt der Abgasrückführanlage 5 stromauf der Einleitstelle 12 zu steuern. In einem einfachen Fall kann es sich bei diesem Rückführventil 17 um ein Rückschlagsperrventil handeln, das eine Fehlströmung von Frischgas durch die Abgasrückführanlage 5 in die Abgasanlage 4 verhindert. Ein derartiges Rückschlagsperrventil kann passiv arbeiten. Bei einer speziellen Ausführungsform kann das Rückführventil 17 steuerbar sein, beispielsweise durch die Ventilsteuerung 15. Das steuerbare Rückführventil 17 kann insbesondere dazu benutzt werden, die vom Abgasventil 14 erzeugten Druckimpulse zu verstärken oder derartige Druckimpulse zu erzeugen, falls das Abgasventil 14 nicht zur Erzeugung von Druckimpulsen angesteuert wird.

Ebenso kann das steuerbare Rückführventil 17 so angesteuert werden, dass eine Fehlströmung von Frischgas über die Rückführanlage 5 in die Abgasanlage 4 verhindert wird. Des Weiteren ist es insbesondere möglich, das steuerbare, also aktive Rückführventil 17 zum Steuern der mit Hilfe des Abgasventils 14 erzeugten Druckimpulse zu betätigen, beispielsweise um Druckimpulse ganz oder nur teilweise durchzulassen. Im Unterschied zu einem passiv arbeitenden Rückschlagsperrventil kann das ansteuerbare Rückführventil 17 einen deutlich größeren durchströmbaren Querschnitt steuern, was die Strömungswiderstände entsprechend reduziert.

Zusätzlich oder alternativ kann in der Frischgasanlage 3 ein Frischgasventil 18 angeordnet sein. Dieses ist in der Frischgasleitung 9 stromauf der Einleitstelle 12 angeordnet und kann zweckmäßig so ausgestaltet sein, dass damit der durchströmbare Querschnitt der Frischgasanlage 3 gesteuert werden kann. Mit Hilfe eines derartigen Frischgasventils 18 kann durch Reduzieren des durchströmbaren Querschnitts der Druck im Frischgas stromab des Frischgasventils 18 abgesenkt werden, was die Druckdifferenz zwischen Entnahmestelle 11 und Einleitstelle 12 vergrößert. Des weiteren ist es mit Hilfe eines derartigen Frischgasventils 18 grundsätzlich möglich, Druckschwankungen im Frischgas, die aufgrund von Ladungswechselvorgängen in der Frischgasanlage 3 ohnehin vorhanden sind, gezielt zu verstärken, um so die Abgasrückführung zu verbessern. Auch das Frischgasventil 18 ist zweckmäßig mit Hilfe der Ventilsteuerung 15 betätigbar.

Um das Rückführventil 17 beziehungsweise das Frischgasventil 18 mit der zur Realisierung der vorstehend beschriebenen Betriebsarten mit entsprechender hoher Dynamik ansteuern beziehungsweise betätigen zu können, können das Rückführventil 17 und/oder das Frischgasventil 18 dynamisch ansteuerbar ausgestaltet sein und/oder als schnellschaltendes Ventil ausgestaltet sein. Darüber hinaus können das Rückführventil 17 und/oder das Frischgasventil 18 als diskontinuierlich arbeitendes Ventil oder als kontinuierlich arbeitendes Ventil ausgestaltet sein.

Die Abgasrückführanlage 5 kann in üblicher Weise einen Abgasrückführkühler 19 enthalten, der in der Abgasrückführleitung 13 stromauf des Rückführventils 17 angeordnet ist. Der Abgasrückführkühler 19 kann dabei ebenso wie der Frischgaskühler 16 in einen Kühlkreis 20 eingebunden sein, bei dem es sich grundsätzlich um den Kühlreis der Brennkraftmaschine 2 handeln kann.

In der Abgasanlage 4 kann stromauf der Entnahmestelle 11 ein Beruhigungsvolumen 21 angeordnet sein. Beispielsweise enthält hierzu die Abgasleitung 10 eine Beruhigungskammer 22, die stromauf der Einleitstelle 11 ausgebildet ist. Zusätzlich oder alternativ kann die Abgasanlage 4 stromab des Abgasventils 14 ein Beruhigungsvolumen 23 aufweisen. Dieses kann beispielsweise in einer Beruhigungskammer 24 ausgebildet sein, die in der Abgasleitung 10 stromab des Abgasventils 14 angeordnet ist. Zusätzlich oder alternativ kann in der Frischgasanlage 3 stromauf des Frischgasventils 18 beziehungsweise stromauf der Einleitstelle 12 ein Beruhigungsvolumen 25 angeordnet sein. Dieses kann beispielsweise in einer Beruhigungskammer 26 angeordnet sein, die in der Frischgasleitung 9 stromauf der Einleitstelle 12 beziehungsweise stromauf des Frischgasventils 18 ausgebildet ist. Zusätzlich oder alternativ kann in der Frischgasanlage 3 stromab der Einleitstelle 12 ein Beruhigungsvolumen 27 angeordnet sein. Beispielsweise befindet sich dieses Beruhigungsvolumen 27 in einer Beruhigungskammer 28, die in der Frischgasleitung 9 stromab der Einleitstelle 12 ausgebildet ist. Die Beruhigungsvolumina 21, 23, 25, 27 sind so bemessen, dass sie die durch die Schaltvorgänge des Abgasventils 14 und - sofern vorhanden - des Rückführventils 17 beziehungsweise des Frischgasventils 18 erzeugten dynamischen Druckveränderungen in der Abgasrückführanlage 5 weitgehend von der Abgasanlage 4 und/oder von der Frischgasanlage 3 entkoppeln. Beispielsweise können so Druckimpulse, die in der Abgasrückführanlage 5 erzeugt werden, in der jeweiligen Beruhigungskammer 22, 24, 26, 28 gedämpft werden, so dass diese Druckimpulse nicht zur Brennkraftmaschine 2 beziehungsweise nicht zum Abgasturbolader 6 gelangen. Gleichzeitig kann eine gegebenenfalls mit den Druckimpulsen einhergehende Geräuschentwicklung mit Hilfe der Beruhigungsvolumina 21, 23, 25, 27 daran gehindert werden, durch die Frischgasanlage 3 beziehungsweise durch die Abgasanlage 4 in die Umgebung des Brennkraftmaschinensystems 1 abzustrahlen.

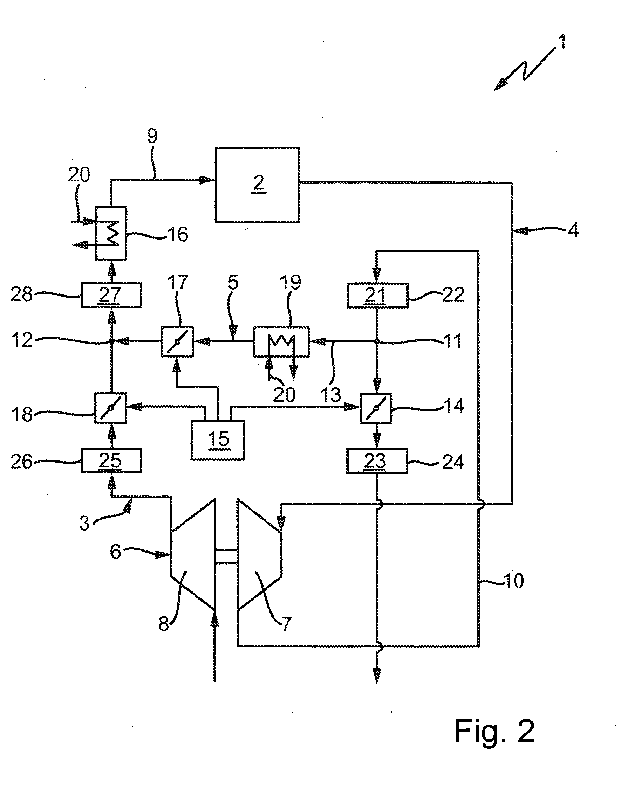

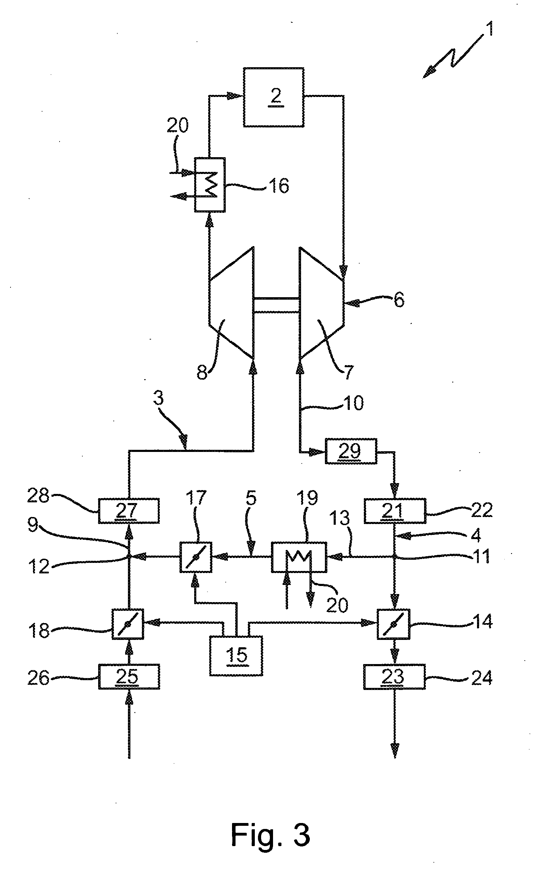

Bei der in Fig. 3 gezeigten Ausführungsform ist außerdem noch zumindest ein zusätzliches Bauteil 29 in der Abgasanlage 4 angeordnet, das grundsätzlich auch bei den Ausführungsformen der Fig. 1 und 2 vorhanden sein kann. Bei diesem Bauteil 29 kann es sich beispielsweise um ein Partikelfilter oder um einen Oxidationskatalysator oder um einen NOX-Speicherkatalysator oder um ein AdBlue-System oder um eine beliebige Kombination der genannten Komponenten handeln. Von besonderem Interesse ist jedoch eine Ausführungsform, bei welcher in der Abgasanlage 4 stromauf der Entnahmestelle 11 ein Partikelfilter 29 angeordnet ist. Hierdurch wird erreicht, dass das rückgeführte Abgas vergleichsweise sauber ist, wodurch eine Verunreinigung der Frischgasanlage 3 stromab der Einleitstelle 12 durch den Kontakt mit rückgeführtem Abgas reduziert werden kann.

Bei der in Fig. 1 gezeigten Ausführungsform ist die Entnahmestelle 11 stromauf der Turbine 7 in der Abgasanlage 4 angeordnet, und die Einleitstelle 12 ist stromab des Verdichters 8 in der Frischgasanlage 3 angeordnet. Bei dieser Ausführungsform findet somit die Abgasrückführung abgasseitig und frischgasseitig jeweils im Hochdruckbereich statt. Insoweit handelt es sich hierbei um ein Hochdruck-Abgasrückführsystem. Diese Ausführungsform hat den Vorteil, dass eine Verschmutzungsgefahr des Verdichters 8 durch die rückgeführten Abgase erheblich reduziert ist.

Bei der in Fig. 2 gezeigten Ausführungsform ist die Entnahmestelle 11 stromab der Turbine 7 in der Abgasanlage 4 angeordnet, und die Einleitstelle 12 ist in der Frischgasanlage 3 stromab des Verdichters 8 angeordnet. Bei dieser Ausführungsform befindet sich somit die Entnahmestelle 11 im Niederdruckbereich, während die Einleitstelle 12 im Hochdruckbereich angeordnet ist. Insoweit handelt es sich hier um ein Niederdruck-Hochdruck-Abgasrückführsystem. Die Anordnung der Entnahmestelle 11 stromab der Turbine 7 bewirkt, dass das rückgeführte Abgas eine reduzierte Temperatur besitzt. Hierdurch ist es insbesondere möglich, das Abgasventil 14 preiswerter auszugestalten, da es nur noch eine reduzierte Temperaturbeständigkeit aufweisen muss.

Im Hinblick auf die in Fig. 2 gezeigte Ausführungsform ist bemerkenswert, dass es mit Hilfe des Abgasventils 14 somit grundsätzlich möglich ist, von der Niederdruckseite der Abgasanlage 4 Abgas auf die Hochdruckseite der Frischgasanlage 3 rückzuführen. Dies wird insbesondere durch die Abgasrückführung mittels Druckimpulsen ermöglicht, die mit Hilfe des Abgasventils 14 realisierbar sind.

Bei der in Fig. 3 gezeigten Ausführungsform ist die Entnahmestelle 11 stromab der Turbine 7 in der Abgasanlage 4 angeordnet, und die Einleitstelle 12 ist in der Frischgasanlage 3 stromauf des Verdichters 8 angeordnet. Somit befindet sich bei dieser Ausführungsform sowohl die Entnahmestelle 11 als auch die Einleitstelle 12 im Niederdruckbereich. Dementsprechend handelt es sich hier um ein Niederdruck-Abgasrückführsystem. Bei dieser Ausführungsform ist die Abgasrückführung gegenüber der in Fig. 2 gezeigten Ausführungsform vereinfacht, da stromauf des Verdichters 8 ein deutlich reduzierter Druck herrscht.

## Patentansprüche

1. Brennkraftmaschinensystem, insbesondere in einem Kraftfahrzeug,
- mit einer Brennkraftmaschine (2),
- mit einer Frischgasanlage (3) zum Zuführen von Frischgas zur Brennkraftmaschine (2),
- mit einer Abgasanlage (4) zum Abführen von Abgas von der Brennkraftmaschine (2),
- mit einer Abgasrückführanlage (5) zum Entnehmen von Abgas aus der Abgasanlage (4) an einer Entnahmestelle (11) und zum Einleiten des entnommenen Abgases in die Frischgasanlage (3) an einer Einleitstelle (12),
- wobei die Abgasanlage (4) stromab der Entnahmestelle (11) ein Abgasventil (14) zum Steuern des durchströmbaren Querschnitts der Abgasanlage (4) aufweist,
**dadurch gekennzeichnet,**
**dass** das Abgasventil (14) als schnellschaltendes Ventil ausgestaltet ist, das in Schaltzeiten von weniger als 50 ms schaltbar ist.

2. Brennkraftmaschinensystem nach Anspruch 1,
**dadurch gekennzeichnet,**
**dass** das Abgasventil (14) dynamisch ansteuerbar ist.

3. Brennkraftmaschinensystem nach Anspruch 1 oder 2,
**dadurch gekennzeichnet,**
**dass** das Abgasventil (14) als diskontinuierlich arbeitendes Ventil, dessen Ventilglied mit entgegengesetzten Bewegungsrichtungen zumindest zwischen zwei vorbestimmten Steuerstellungen umschaltbar ist, oder als kontinuierlich arbeitendes Ventil ausgestaltet ist, dessen Ventilglied mit gleicher Bewegungsrichtung zumindest zwei verschiedene Steuerstellungen durchläuft.

4. Brennkraftmaschinensystem nach einem der Ansprüche 1 bis 3,
**dadurch gekennzeichnet,**
**dass** zur Realisierung einer vorbestimmten Abgasrückführrate das Abgasventil (14) zur Erzeugung impulsartiger Druckstöße mit vorbestimmter Frequenz in der Abgasrückführanlage (5) ausgestaltet und/oder ansteuerbar ist.

5. Brennkraftmaschinensystem nach einem der Ansprüche 1 bis 4,
**dadurch gekennzeichnet,**
**dass** die Entnahmestelle (11) stromauf einer in der Abgasanlage (4) angeordneten Turbine (7) eines Abgasturboladers (6) und die Einleitstelle (12) stromab eines in der Frischgasanlage (3) angeordneten Verdichters (8) des Abgasturboladers (6) angeordnet ist.

6. Brennkraftmaschinensystem nach einem der Ansprüche 1 bis 4,
**dadurch gekennzeichnet,**
**dass** die Entnahmestelle (11) stromab einer in der Abgasanlage (4) angeordneten Turbine (7) eines Abgasturboladers (6) und die Einleitstelle (12) stromab eines in der Frischgasanlage (3) angeordneten Verdichters (8) des Abgasturboladers (6) angeordnet ist.

7. Brennkraftmaschinensystem nach einem der Ansprüche 1 bis 4,
**dadurch gekennzeichnet,**
**dass** die Entnahmestelle (11) stromab einer in der Abgasanlage (4) angeordneten Turbine (7) eines Abgasturboladers (7) und die Einleitstelle (12) stromauf eines in der Frischgasanlage (3) angeordneten Verdichters (8) des Abgasturboladers (6) angeordnet ist.

8. Brennkraftmaschinensystem nach einem der Ansprüche 1 bis 7,
**dadurch gekennzeichnet,**
**dass** die Einleitstelle (12) stromauf eines in der Frischgasanlage (3) angeordneten Frischgaskühlers (16) angeordnet ist.

9. Brennkraftmaschinensystem nach einem der Ansprüche 1 bis 8,
**dadurch gekennzeichnet,**
**dass** in der Abgasrückführanlage (5) ein Rückführventil (17) zum Steuern eines durchströmbaren Querschnitts der Abgasrückführanlage (5) stromauf der Einleitstelle (12) angeordnet ist.

10. Brennkraftmaschinensystem nach einem der Ansprüche 1 bis 9,
**dadurch gekennzeichnet,**
**dass** in der Frischgasanlage (3) ein Frischgasventil (18) zum Steuern eines durchströmbaren Querschnitts der Frischgasanlage (3) stromauf der Einleitstelle (12) angeordnet ist.

11. Brennkraftmaschinensystem nach einem der Ansprüche 1 bis 10,
**dadurch gekennzeichnet,**
**dass** in der Abgasanlage (4) stromauf der Entnahmestelle (11) ein Beruhigungsvolumen (21) angeordnet ist.

12. Brennkraftmaschinensystem nach einem der Ansprüche 1 bis 11,
**dadurch gekennzeichnet,**
**dass** in der Abgasanlage (4) stromab des Abgasventils (14) ein Beruhigungsvolumen (23) angeordnet ist.

13. Brennkraftmaschinensystem nach einem der Ansprüche 1 bis 11,
**dadurch gekennzeichnet,**
**dass** in der Frischgasanlage (3) stromauf der Einleitstelle (12) oder stromauf des Frischgasventils (18) ein Beruhigungsvolumen (25) angeordnet ist.

14. Brennkraftmaschinensystem nach einem der Ansprüche 1 bis 11,
**dadurch gekennzeichnet,**
**dass** in der Frischgasanlage (3) stromab der Einleitstelle (12) ein Beruhigungsvolumen (27) angeordnet ist.

## Claims

1. An internal combustion engine system, in particular in a motor vehicle, comprising
- an internal combustion engine (2),
- a fresh gas system (3) for supplying fresh gas to the internal combustion engine (2),
- an exhaust gas system (4) for discharging exhaust gas from the internal combustion engine (2),
- an exhaust gas recirculation system (5) for removing exhaust gas from the exhaust gas system (4) at a removal point (11) and for introducing the removed exhaust gas into the fresh gas system (3) at an introduction point (12),
- wherein the exhaust gas system (4) has an exhaust gas valve (14) arranged downstream of the removal point (11) in order to control the penetrable cross-section of the exhaust gas system (4),
**characterized in**
**that** the exhaust gas (14) is designed as a fast-switching valve that is switchable within switching times of less than 50 ms.

2. The internal combustion engine according to claim 1,
**characterized in**
**that** the exhaust gas valve (14) is dynamically controllable.

3. The internal combustion engine system according to claim 1 or claim 2,
**characterized in**
**that** the exhaust gas valve (14) is designed as a discontinuously operating valve, the valve member of which is switchable with opposite moving directions at least between two predefined control positions, or is designed as a continuously operating valve, the valve member of which passes with the same moving direction through at least two different control positions.

4. The internal combustion engine system according to any one of the claims 1 to 3,
**characterized in**
**that** for implementing a predefined exhaust gas recirculation rate, the exhaust gas valve (14) is designed and/or controllable for generating impulse-like pressure surges with a predefined frequency within the exhaust gas recirculation system (5).

5. The internal combustion engine system according to any one of the claims 1 to 4,
**characterized in**
**that** the removal point (11) is arranged upstream of a turbine (7) of an exhaust gas turbocharger (6) arranged in the exhaust gas system (4), and the introduction point (12) is arranged downstream of a compressor (8) of the exhaust gas turbocharger (6) arranged in the fresh gas system (3).

6. The internal combustion engine system according to any one of the claims 1 to 4,
**characterized in**
**that** the removal point (11) is arranged downstream of a turbine (7) of an exhaust gas turbocharger (6) arranged in the exhaust gas system (4), and the introduction point (12) is arranged downstream of a compressor (8) of the exhaust gas turbocharger (6) arranged in the fresh gas system (3).

7. The internal combustion engine system according to any one of the claims 1 to 4,
**characterized in**
**that** the removal point (11) is arranged downstream of a turbine (7) of an exhaust gas turbocharger (6) arranged in the exhaust gas system (4), and the introduction point (12) is arranged upstream of a compressor (8) of the exhaust gas turbocharger (6) arranged in the fresh gas system (3).

8. The internal combustion engine system according to any one of the claims 1 to 7,
**characterized in**
**that** the introduction point (12) is arranged upstream of a fresh gas cooler (16) arranged in the fresh gas system (3).

9. The internal combustion engine system according to any one of the claims 1 to 8,
**characterized in**
**that** in the exhaust gas recirculation system (5), a recirculation valve (17) for controlling a penetrable cross-section of the exhaust gas recirculation system (5) is arranged upstream of the introduction point (12).

10. The internal combustion engine system according to any one of the claims 1 to 9,
**characterized in**
**that** in the fresh gas system (3), a fresh gas valve (18) for controlling a penetrable cross-section of the fresh gas system (3) is arranged upstream of the introduction point (12).

11. The internal combustion engine system according to any one of the claims 1 to 10,
**characterized in**
**that** in the exhaust gas system (4), a damping chamber (21) is arranged upstream of the removal point (11).

12. The internal combustion engine system according to any one of the claims 1 to 11,
**characterized in**
**that** in the exhaust gas system (4), a damping chamber (23) is arranged downstream of the exhaust gas valve (14).

13. The internal combustion engine system according to any one of the claims 1 to 11,
**characterized in**
**that** in the fresh gas system (3), a damping chamber (25) is arranged upstream of the introduction point (12) or upstream of the fresh gas valve (18).

14. The internal combustion engine system according to any one of the claims 1 to 11,
**characterized in**
**that** in the fresh gas system (3), a damping chamber (27) is arranged downstream of the introduction point (12).

## Revendications

1. Système à moteur à combustion interne, notamment dans un véhicule automobile,
- comportant un moteur à combustion interne (2),
- comportant une installation de gaz frais (3) pour alimenter en gaz frais le moteur à combustion interne (2),
- comportant une installation de gaz d'échappement (4) pour évacuer le gaz d'échappement hors du moteur à combustion interne (2),
- comportant une installation de réintroduction de gaz d'échappement (5) pour prélever du gaz d'échappement depuis une installation de gaz d'échappement (4) à un emplacement de prélèvement (11) et pour introduire les gaz d'échappement prélevés dans l'installation de gaz frais (3) à un emplacement d'introduction (12),
- dans lequel l'installation de gaz d'échappement (4) présente en aval de l'emplacement de prélèvement (11) une soupape de gaz d'échappement (14) pour commander la section transversale pouvant être traversée de l'installation de gaz d'échappement (4),
**caractérisé en ce que**
la soupape de gaz d'échappement (14) est réalisée comme une soupape à commutation rapide, qui peut être commutée dans des temps de commutation de moins de 50 ms.

2. Système à moteur à combustion interne selon la revendication 1,
**caractérisé en ce que**
la soupape de gaz d'échappement (14) peut être commandée dynamiquement.

3. Système à moteur à combustion interne selon la revendication 1 ou 2,
**caractérisé en ce que**
la soupape de gaz d'échappement (14) est réalisée comme une soupape fonctionnant de manière discontinue, dont l'organe de soupape peut être commuté avec des directions de mouvement opposées entre au moins deux positions de commande prescrites, ou comme une soupape fonctionnant de manière continue, dont l'organe de soupape passe à au moins deux positions de commande différentes avec la même direction de mouvement.

4. Système à moteur à combustion interne selon une des revendications 1 à 3,
**caractérisé en ce que**
pour réaliser un taux de réintroduction de gaz d'échappement prescrit, la soupape de gaz d'échappement (14) est réalisée et/ou peut être commandée de manière à générer des coups de bélier impulsionnels avec une fréquence prescrite dans l'installation de réintroduction de gaz d'échappement (5).

5. Système à moteur à combustion interne selon une des revendications 1 à 4,
**caractérisé en ce que**
l'emplacement de prélèvement (11) est disposé en amont d'une turbine (7) d'un turbocompresseur de gaz d'échappement (6) disposée dans l'installation de gaz d'échappement (4) et l'emplacement de prélèvement (12) est disposé en aval d'un compresseur (8) du turbocompresseur de gaz d'échappement (6) disposé dans l'installation de gaz frais (3).

6. Système à moteur à combustion interne selon une des revendications 1 à 4,
**caractérisé en ce que**
l'emplacement de prélèvement (11) est disposé en aval d'une turbine (7) d'un turbocompresseur de gaz d'échappement (6) disposée dans l'installation de gaz d'échappement (4) et l'emplacement de prélèvement (12) est disposé en aval d'un compresseur (8) du turbocompresseur de gaz d'échappement (6) disposé dans l'installation de gaz frais (3).

7. Système à moteur à combustion interne selon une des revendications 1 à 4,
**caractérisé en ce que**
l'emplacement de prélèvement (11) est disposé en aval d'une turbine (7) d'un turbocompresseur de gaz d'échappement (7) disposée dans l'installation de gaz d'échappement (4) et l'emplacement de prélèvement (12) est disposé en amont d'un compresseur (8) du turbocompresseur de gaz d'échappement (6) disposé dans l'installation de gaz frais (3).

8. Système à moteur à combustion interne selon une des revendications 1 à 7,
**caractérisé en ce que**
l'emplacement de prélèvement (12) est disposé en amont d'un refroidisseur de gaz frais (16) disposé dans l'installation de gaz frais (3).

9. Système à moteur à combustion interne selon une des revendications 1 à 8,
**caractérisé en ce que**
dans l'installation de réintroduction des gaz d'échappement (5), une soupape de réintroduction (17) pour commander une section transversale pouvant être traversée de l'installation de réintroduction des gaz d'échappement (5) est disposée en amont de l'emplacement d'introduction (12).

10. Système à moteur à combustion interne selon une des revendications 1 à 9,
**caractérisé en ce que**
dans l'installation de gaz frais (3), une soupape de gaz frais (18) pour commander une section transversale pouvant être traversée de l'installation de gaz frais (3) est disposée en amont de l'emplacement d'introduction (12).

11. Système à moteur à combustion interne selon une des revendications 1 à 10,
**caractérisé en ce que**
dans l'installation de gaz d'échappement (4), un volume stabilisateur (21) est disposé en amont de l'emplacement de prélèvement (11).

12. Système à moteur à combustion interne selon une des revendications 1 à 11,
**caractérisé en ce que**
dans l'installation de gaz d'échappement (4), un volume stabilisateur (23) est disposé en aval de la soupape de gaz d'échappement (14).

13. Système à moteur à combustion interne selon une des revendications 1 à 11,
**caractérisé e ce que**
dans l'installation de gaz frais (3), un volume stabilisateur (25) est disposé en amont de l'emplacement de prélèvement (12) ou en amont de la soupape de gaz frais (18).

14. Système à moteur à combustion interne selon une des revendications 1 à 11,
**caractérisé en ce que**
dans l'installation de gaz frais (3), un volume stabilisateur (27) est disposé en aval de l'emplacement d'introduction (12).
